# EUROPÄISCHE PATENTSCHRIFT

(11) **EP 3 129 285 B1**
(45) Veröffentlichungstag und Bekanntmachung des Hinweises auf die Patenterteilung: **01.05.2019**
(21) Anmeldenummer: 15713701.9
(22) Anmeldetag: 26.03.2015
(51) Int. Cl.: B64D 11/06

(54) **FLUGZEUGSITZRAHMENVORRICHTUNG**
AIRCRAFT SEAT FRAME DEVICE
SYSTÈME DE BÂTI DE SIÈGE D'AVION

(30) Priorität: 07.04.2014 DE 102014104915
(43) Veröffentlichungstag der Anmeldung: 15.02.2017
(73) Patentinhaber: Recaro Aircraft Seating GmbH & Co. KG, 74523 Schwäbisch Hall (DE)
(72) Erfinder: KONICZEK, Adam, 74235 Erlenbach (DE); GRAU, Daniel, 71540 Murrhardt (DE); STROBL, Florian, 96181 Rauhenebrach (DE); DAHER, Mohammed, 71332 Waiblingen (DE)
(74) Vertreter: Daub, Thomas
(86) Internationale Anmeldenummer: PCT/EP2015/056645
(87) Internationale Veröffentlichungsnummer: WO 2015/155026

(56) Entgegenhaltungen:
- WO-A2-2013/144935
- DE-A1- 19 909 362
- DE-A1-102010 046 126
- US-A- 5 868 472

## Beschreibung

### Stand der Technik

Die Erfindung betrifft eine Flugzeugsitzrahmenvorrichtung nach dem Oberbegriff des Patentanspruchs 1.

Es ist bereits eine Flugzeugsitzrahmenvorrichtung mit zumindest einem ersten Rahmenquerelement und zumindest einem beabstandet dazu angeordneten zweiten Rahmenquerelement vorgeschlagen worden, wobei die beiden Rahmenquerelemente miteinander verbunden sind. Eine solche Vorrichtung ist z.B. aus WO 2013/144935 A2 bekannt. Die Rahmenquerelemente können als "I"-Profile gestaltet werden, und ein Rahmenquerelement weist fest angebrachte Anbindungsmodule für Möbel auf.

Die Aufgabe der Erfindung besteht insbesondere darin, eine gattungsgemäße Vorrichtung mit verbesserten Eigenschaften hinsichtlich Flexibilität und Gewicht bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer gattungsgemäßen Flugzeugsitzrahmenvorrichtung mit zumindest einem ersten Rahmenquerelement und zumindest einem beabstandet dazu angeordneten zweiten Rahmenquerelement, wobei die beiden Rahmenquerelemente miteinander verbunden sind.

Es wird unter anderem vorgeschlagen, dass zumindest eines der Rahmenquerelemente als ein geöffnetes Profil ausgebildet ist. Unter einem "Rahmenquerelement" soll dabei insbesondere ein Teil eines Grundrahmens einer Flugzeugsitzrahmenvorrichtung verstanden werden, wobei ein Rahmenquerelement vorzugsweise eine breite Seite des Grundrahmens ausbildet.

Die Rahmenquerelemente erstrecken sich in einem montierten Zustand dabei vorzugsweise im Wesentlichen quer zu einer Sitzrichtung eines Sitzes, der über den Grundrahmen mit einem Kabinenboden eines Flugzeugs verbunden ist. Unter "beabstandet zueinander angeordnet" soll dabei insbesondere verstanden werden, dass zwischen dem ersten und dem zweiten Rahmenquerelement ein Abstand vorhanden ist, der wesentlich, insbesondere mindestens doppelt so groß ist wie eine Breite der Rahmenquerelemente. Dabei ist ein Abstand zwischen den beiden Rahmenquerelementen in einer Längserstreckung der beiden Rahmenquerelemente vorzugsweise gleichbleibend, die Rahmenquerelemente sind also parallel zueinander ausgerichtet. Grundsätzlich ist es natürlich auch denkbar, dass die Rahmenquerelemente in einem Winkel zueinander ausgerichtet sind, der sich von 0 Grad unterscheidet, und dass ein Abstand zwischen den beiden Rahmenquerelementen im Verlauf der Längserstreckung unterschiedlich groß ausgebildet ist. Dabei sind die Rahmenquerelemente vorzugsweise aus einem Metall, wie insbesondere einem Aluminium oder einem anderen, dem Fachmann als sinnvoll erscheinenden Leichtmetall, gebildet. Grundsätzlich ist es auch denkbar, dass die Rahmenquerelemente aus einem anderen, dem Fachmann als sinnvoll erscheinenden Material gebildet sind, wie beispielsweise aus einem Faserverbundwerkstoff, wie insbesondere aus einem faserverstärkten Kunststoff. Dabei sind die Rahmenquerelemente, je nachdem, aus welchem Material sie gebildet sind, mittels eines entsprechenden Herstellungsverfahrens hergestellt, wie beispielsweise mittels eines Strangpressverfahrens, eines Warmpressens, eines Biegeverfahrens oder eines anderen Ur- oder Umformverfahrens. Darunter, dass die "Rahmenquerelemente ein geöffnetes Profil aufweisen", soll dabei insbesondere verstanden werden, dass das Profil zumindest zu drei Seiten hin geöffnet ist und das Profil in einem Querschnitt insbesondere keinen geschlossenen Rahmen ausbildet. Dabei soll unter einem geöffneten Profil vorzugsweise ein C-Profil, ein I-Profil oder ein L-Profil verstanden werden. Dabei ist das Rahmenquerelement vorzugsweise über seine gesamte Längserstreckung als ein geöffnetes Profil ausgebildet, wobei es auch denkbar ist, dass das Rahmenquerelement in Teilbereichen als ein geschlossenes Profil ausgebildet ist. Die Teilbereiche, in denen das Rahmenquerelement dabei ein geschlossenes Profil ausbildet, bilden dabei höchstens 30%, vorzugsweise weniger als 10%, bevorzugt weniger als 5 % der gesamten Längserstreckung des Rahmenquerelements aus, wobei das Rahmenquerelement in einer besonders bevorzugten Ausgestaltung über seine gesamte Längserstreckung als ein geöffnetes Profil ausgebildet ist. Dadurch können Rahmenquerelemente mit einem besonders vorteilhaft geringen Gewicht und einer vorteilhaften Steifigkeit bereitgestellt werden. Durch eine erfindungsgemäße Ausgestaltung kann vorteilhaft eine Flugzeugsitzrahmenvorrichtung bereitgestellt werden, die insbesondere vorteilhaft leicht und stabil ausgebildet werden kann.

Weiter wird vorgeschlagen, dass beide Rahmenquerelemente als ein geöffnetes Profil ausgebildet sind. Dadurch kann ein Gewichtseinsparpotential besonders vorteilhaft ausgenutzt werden.

Zudem wird vorgeschlagen, dass wenigstens eines der Rahmenquerelemente als ein C-Profil ausgebildet ist. Unter einem "C-Profil" soll dabei insbesondere ein Profil verstanden werden, das in seinem Querschnitt eine C-Form aufweist. Ein als C-Profil ausgebildetes Element weist dabei eine Oberseite, eine Unterseite und einen Seitenbereich auf, der die Oberseite und die Unterseite an einem ersten Ende miteinander verbindet, wobei die Ober- und Unterseite an dem, dem ersten Ende gegenüberliegenden zweiten Ende geöffnet und nicht miteinander verbunden sind. Dabei weist das als C-Profil ausgebildete Rahmenquerelement insbesondere einen Schubmittelpunkt auf, der außerhalb des Rahmenquerelements liegt. Dadurch können die Rahmenquerelemente mit einer besonders hohen Kraftaufnahme ausgebildet werden, da der Schubmittelpunkt vorteilhaft außerhalb des Profils angeordnet ist.

Des Weiteren wird vorgeschlagen, dass die Rahmenquerelemente als Strangpressprofile ausgebildet sind. Unter einem "Strangpressprofil" soll dabei insbesondere ein Element verstanden werden, das in einem Stangpressverfahren hergestellt ist. Dadurch können die Rahmenquerelemente besonders einfach und kostengünstig hergestellt werden. Insbesondere können besonders einfach unterschiedlich lange Rahmenquerelemente bereitgestellt werden, wodurch unterschiedlich große Flugzeugrahmenvorrichtungen einfach bereitgestellt werden können.

Ferner wird vorgeschlagen, dass die Flugzeugsitzrahmenvorrichtung zumindest zwei Rahmenlängselemente aufweist, die dazu vorgesehen sind, jeweils an ihren Enden fest mit einem der Rahmenquerelemente verbunden zu werden. Unter einem "Rahmenlängselement" soll dabei insbesondere ein Element verstanden werden, das in einem montierten Zustand in einer Längsrichtung des Flugzeugs verläuft und sich insbesondere zwischen den beiden Rahmenquerelementen der Flugzeugsitzrahmenvorrichtung erstreckt. Dabei weisen die Rahmenlängselemente vorzugsweise einen Winkel zwischen 65 Grad und 115 Grad zu den Rahmenquerelementen auf. Dadurch können die beiden Rahmenquerelemente besonders vorteilhaft miteinander verbunden werden.

Es wird weiter vorgeschlagen, dass die Rahmenlängselemente zur Ausbildung unterschiedlicher Sitzkonfigurationen dazu vorgesehen sind, in unterschiedlichen Abständen zueinander an den Rahmenquerelementen befestigt zu werden. Unter "unterschiedlichen Sitzkonfigurationen" sollen dabei insbesondere unterschiedliche Ausbildungen der Flugzeugsitzrahmenvorrichtung für unterschiedliche Flugzeugsitzvorrichtungen verstanden werden, die unterschiedliche Eigenschaften aufweisen, wie beispielsweise unterschiedlich große Flugzeugsitze, unterschiedlich große Shellelemente oder generell andere Abmessungen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann die Flugzeugsitzrahmenvorrichtung besonders vorteilhaft variabel ausgebildet werden, da durch einfache Variation von Abständen zwischen den Rahmenquerelementen unterschiedliche Flugzeugsitze und Shellelemente mit der Flugzeugsitzrahmenvorrichtung verbunden und dadurch in einer Flugzeugkabine aufgeständert werden können.

Zudem wird vorgeschlagen, dass die entsprechenden Rahmenlängselemente zur Ausbildung unterschiedlicher Sitzkonfigurationen identisch ausgebildet sind. Darunter dass "die entsprechenden Rahmenlängselemente identisch ausgebildet sind", soll dabei insbesondere verstanden werden, dass die Rahmenlängselemente zur Ausbildung verschiedener Sitzkonfigurationen jeweils gleich ausgebildet sind. Dabei sind insbesondere die Rahmenlängselemente, die die Rahmenquerelemente an einem ersten Ende miteinander verbinden, die Rahmenlängselemente, die die Rahmenquerelemente in einem Mittelbereich miteinander verbinden, und die Rahmenlängselemente, die die Rahmenquerelemente an einem zweiten Ende miteinander verbinden, bei unterschiedlichen Sitzkonfigurationen jeweils identisch ausgebildet und sind zur Ausbildung der unterschiedlichen Sitzkonfigurationen lediglich in einem unterschiedlichen Abstand zueinander angeordnet. Dadurch können unterschiedliche Sitzkonfigurationen durch die Verwendung von Gleichteilen besonders einfach und kostengünstig realisiert werden.

Ferner wird vorgeschlagen, dass die Flugzeugsitzrahmenvorrichtung wenigstens ein Kabinenbodenbefestigungselement aufweist, das in montiertem Zustand fest mit einem der Rahmenquerelemente verbunden ist. Unter einem "Kabinenbodenbefestigungselement" soll dabei insbesondere ein Element verstanden werden, über das die Flugzeugsitzrahmenvorrichtung mit einem Kabinenboden einer Flugzeugkabine gekoppelt werden kann. Dabei ist das Kabinenbodenbefestigungselement vorzugsweise als ein Element ausgebildet, das zur Anbindung eines Standardverbindungselements vorgesehen ist, wie beispielsweise eines Fittings, das zur standardmäßigen Anbindung von Flugzeugsitzen an in dem Kabinenboden angebundenen Befestigungsschienen vorgesehen ist. Dadurch kann eine besonders einfache und kostengünstige Anbindung an eine Flugzeugkabine bereitgestellt werden.

Erfindungsgemäß weist die Flugzeugsitzrahmenvorrichtung wenigstens ein Aufbauanbindungsmodul auf, das in einem montierten Zustand fest mit einem der Rahmenquerelemente, alternativerweise auch mit einem der Rahmenlängselemente, verbunden ist. Unter einem "Aufbauanbindungsmodul" soll dabei insbesondere ein Modul verstanden werden, das dazu vorgesehen ist, einen Aufbau, wie insbesondere ein Shellelement, an der Flugzeugsitzrahmenvorrichtung anzubinden. Dadurch kann ein Aufbau besonders einfach an die Flugzeugsitzrahmenvorrichtung angebunden werden.

Erfindungsgemäß ist das Aufbauanbindungsmodul auch dazu vorgesehen, wenigstens um eine Ausgleichsachse schwenkbar zu sein. Dadurch können Lasten, die über das Aufbauanbindungsmodul in den Aufbau eingeleitet werden, verringert werden, wodurch ein Aufbau durch die geringeren Lasten, die er aufnehmen und weiterleiten muss, vorteilhaft leicht ausgebildet werden kann.

Weiter wird vorgeschlagen, dass das Aufbauanbindungsmodul wenigstens ein Anschlagelement umfasst, das eine Ausgleichsbewegung um die Ausgleichsachse auf einen Winkel zwischen -60 und +60 Grad beschränkt. Unter einer "Ausgleichsachse zwischen -60 und +60 Grad" soll dabei insbesondere ein Winkel zwischen -60 und +60 Grad, vorzugsweise ein Winkel zwischen -10 Grad und +10 Grad, also ein Verschwenkwinkel von 20 Grad, verstanden werden. Dadurch kann eine Bewegungsfreiheit des über das Aufbauanbindungsmodul angebundenen Aufbaus beschränkt werden.

Zudem wird vorgeschlagen, dass das Aufbauanbindungsmodul zu einer Ausgleichsbewegung um eine Schwenkachse vorgesehen ist, die senkrecht zu der Ausgleichsachse ausgerichtet ist. Dadurch kann das Aufbauanbindungsmodul besonders vorteilhaft zum Ausgleich von Pitch- und Rollbewegungen des über das Aufbauanbindungsmodul befestigten Aufbaus ausgebildet werden.

Außerdem wird vorgeschlagen, dass die Flugzeugsitzrahmenvorrichtung wenigstens eine Bodenplatte aufweist, die zumindest mit den Rahmenquerelementen verbunden ist und ein Lochmuster aufweist. Unter einer "Bodenplatte" soll dabei insbesondere eine Platte verstanden werden, die in einem unteren Bereich der Rahmenquerelemente angebracht ist und vorzugsweise eine gesamte Fläche, die die Rahmenquerelemente mit den außen angebrachten Rahmenlängselementen aufspannen, einnimmt, wobei die Bodenplatte zur Anbindung von zusätzlichen Elementen vorgesehen ist. Dadurch kann eine besonders vorteilhafte Möglichkeit geschaffen werden, um zusätzliche Elemente an die Flugzeugsitzrahmenvorrichtung anzubringen und insbesondere Elemente, wie beispielsweise eine Verkabelung, durch das Lochmuster in der Flugzeugsitzrahmenvorrichtung zu führen.

Die erfindungsgemäße Flugzeugsitzrahmenvorrichtung soll hierbei nicht auf die oben beschriebene Anwendung und Ausführungsform beschränkt sein. Insbesondere kann die erfindungsgemäße Flugzeugsitzrahmenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzrahmenvorrichtung,
- Fig. 2: eine schematische Darstellung der Flugzeugsitzrahmenvorrichtung in einer Flugzeugsitzvorrichtung mit einem Shellelement,
- Fig. 3: eine schematische Draufsicht auf die erfindungsgemäße Flugzeugsitzrahmenvorrichtung,
- Fig. 4: eine schematische Seitenansicht auf die erfindungsgemäße Flugzeugsitzrah menvorrichtung,
- Fig. 5: eine schematische Detailansicht auf ein Rahmenquerelement und ein Kabinenbodenbefestigungselement der Flugzeugsitzrahmenvorrichtung,

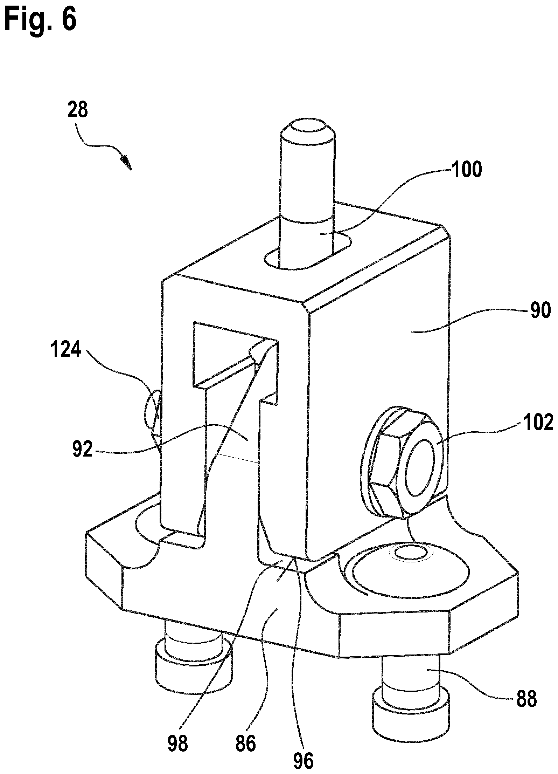

- Fig. 6: eine schematische Darstellung eines Aufbauanbindungsmoduls mit einer Rotationsbegrenzung,

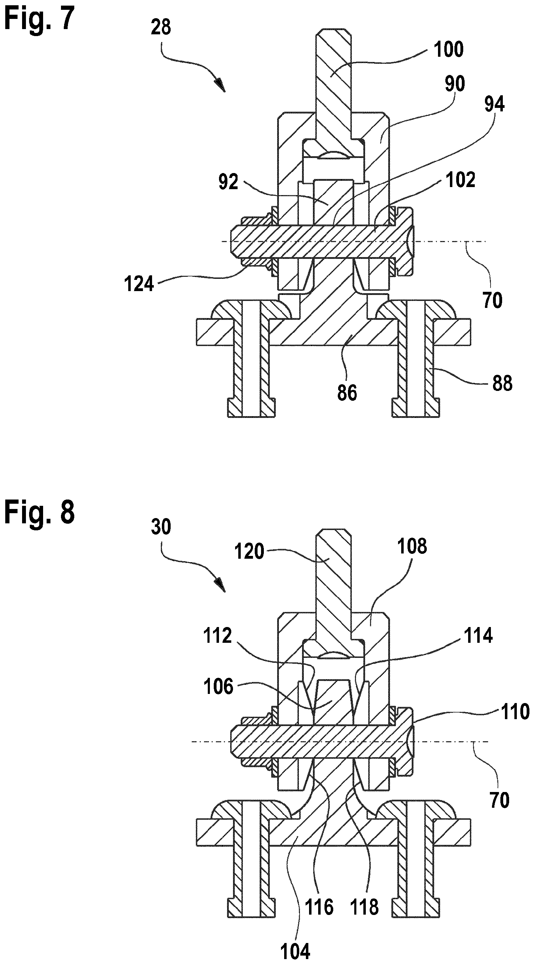

- Fig. 7: eine Schnittansicht durch das Aufbauanbindungsmodul aus Figur 6 und
- Fig. 8: eine Schnittansicht durch ein weiteres Aufbauanbindungsmodul.

### Beschreibung des Ausführungsbeispiels

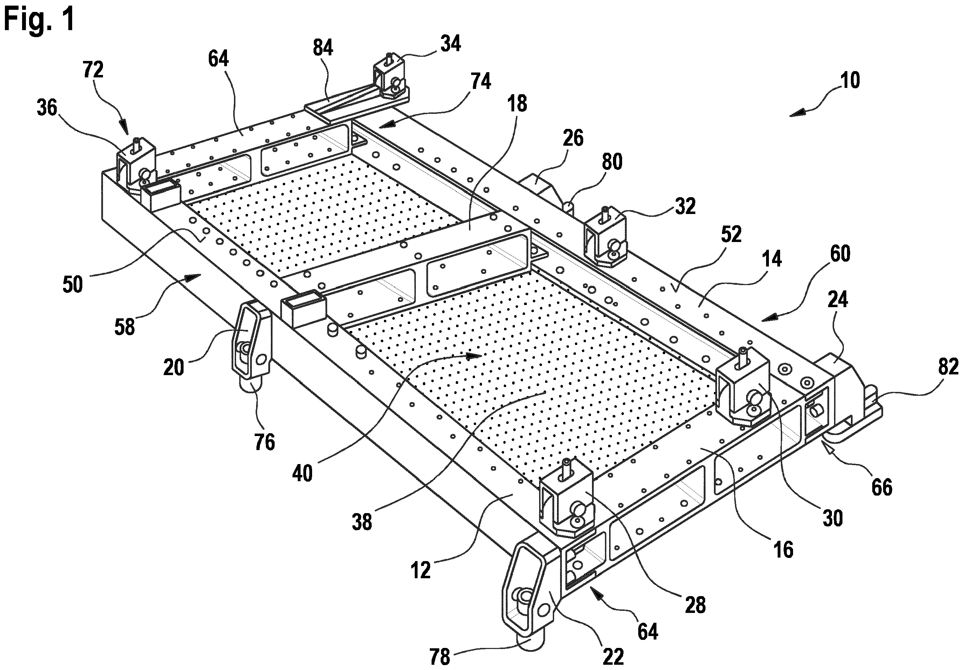

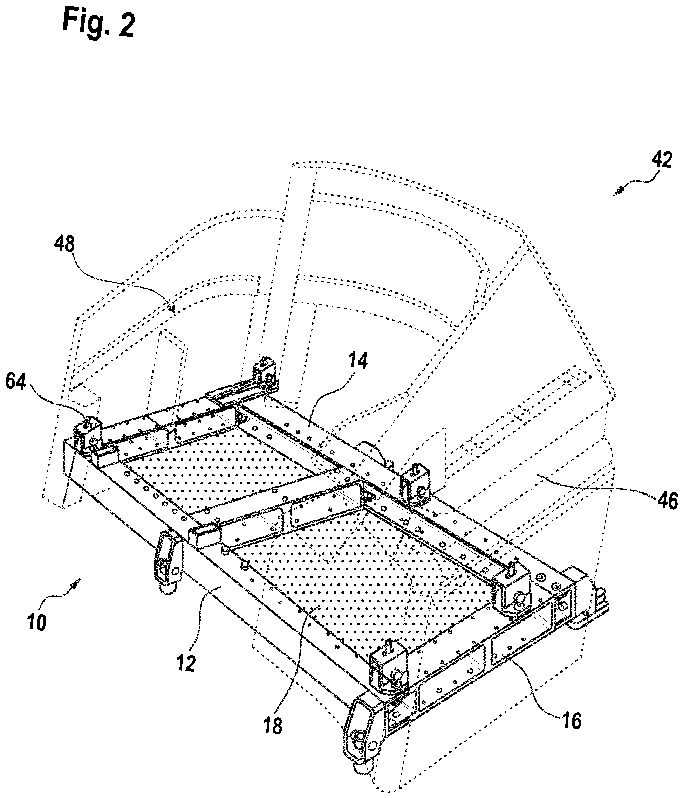

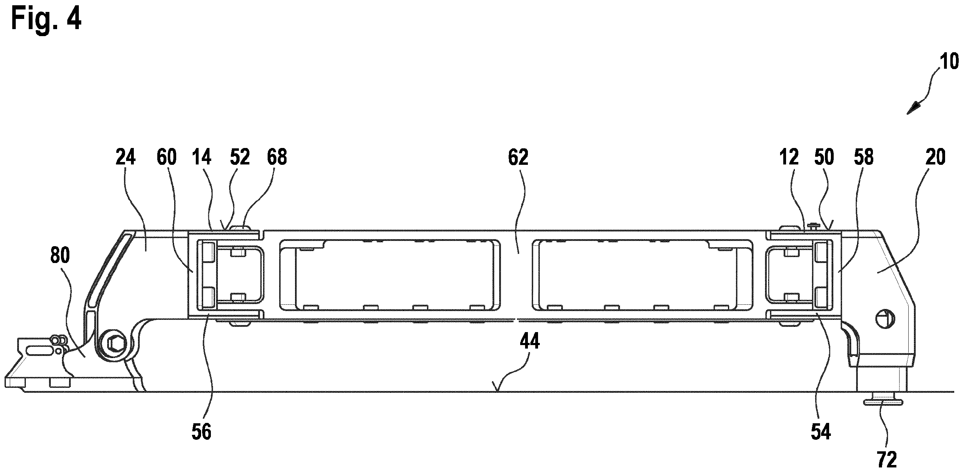

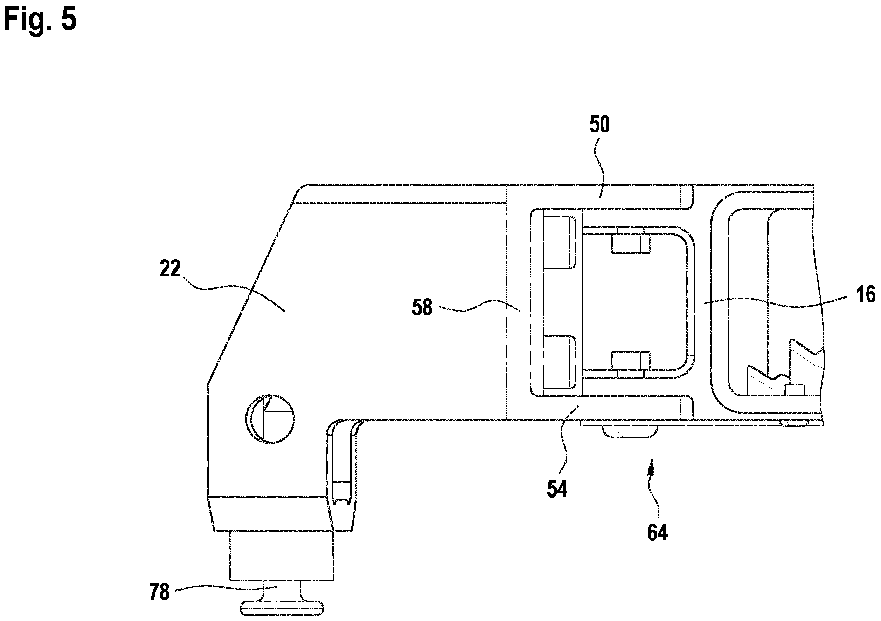

Die Figuren 1 bis 5 zeigen eine erfindungsgemäße Flugzeugsitzrahmenvorrichtung 10. Die Flugzeugsitzrahmenvorrichtung 10 ist Teil einer teilweise dargestellten Flugzeugsitzvorrichtung 42. Die Flugzeugsitzvorrichtung 42 umfasst einen nicht näher dargestellten Flugzeugsitz. In einem montierten Zustand ist der Flugzeugsitz in einem Flugzeug angebracht. Dabei ist der Flugzeugsitz auf einer Aufständerebene aufgeständert. Ein Kabinenboden 44 einer nicht näher dargestellten Flugzeugkabine eines Flugzeugs bildet dabei die Aufständerebene aus. Die Flugzeugsitzvorrichtung 42 umfasst weiter ein Shellelement 46. Das Shellelement 46 ist dazu vorgesehen, einen Flugzeugsitzbereich 48 des nicht näher dargestellten Flugzeugsitzes von dem Rest der Flugzeugkabine und insbesondere von anderen Flugzeugsitzbereichen abzugrenzen. Das Shellelement 46 bildet dabei eine Konsole und Verstaumöglichkeiten für den Flugzeugsitzbereich 48 des Flugzeugsitzes der Flugzeugsitzvorrichtung 42 aus. Weiter bildet das Shellelement 46 eine Konsole des Flugzeugsitzbereichs aus, die beispielsweise eine Beinablage, einen Monitor und/oder Aufbewahrungsmöglichkeiten aufweist, wobei der Flugzeugsitzbereich hinter dem beschriebenen Flugzeugsitzbereich 48 angeordnet ist. Grundsätzlich ist es dabei auch denkbar, dass das Shellelement 46 auf eine andere, dem Fachmann als sinnvoll erscheinende Weise ausgebildet ist und zusätzliche Elemente oder weniger Elemente als oben beschrieben aufweist. Die Flugzeugsitzrahmenvorrichtung 10 bildet dabei einen Grundrahmen, also einen Unterbau der Flugzeugsitzvorrichtung 42 aus. Über die Flugzeugsitzrahmenvorrichtung 10 sind der nicht näher dargestellte Flugzeugsitz und das Shellelement 46 in montiertem Zustand auf dem Kabinenboden 44 des Flugzeugs aufgeständert.

Die Flugzeugsitzrahmenvorrichtung 10 umfasst ein erstes Rahmenquerelement 12. Weiter umfasst die Flugzeugsitzrahmenvorrichtung 10 ein zweites Rahmenquerelement 14. Die Rahmenquerelemente 12, 14 sind beabstandet zueinander angeordnet. Dabei verlaufen die Rahmenquerelemente 12, 14 parallel zueinander. Die beiden Rahmenquerelemente 12, 14 verlaufen dabei in etwa in einem rechten Winkel zu einer Sitzrichtung des Flugzeugsitzes, der an die Flugzeugsitzrahmenvorrichtung 10 angebunden ist. Die Rahmenquerelemente 12, 14 sind miteinander verbunden. Die Rahmenquerelemente 12, 14 bilden in einem verbundenen Zustand den Grundrahmen der Flugzeugsitzrahmenvorrichtung 10 mit aus. Das erste Rahmenquerelement 12 ist als ein geöffnetes Profil ausgebildet. Das zweite Rahmenquerelement 14 ist ebenfalls als ein geöffnetes Profil ausgebildet. Beide Rahmenquerelemente 12, 14 sind jeweils als ein geöffnetes Profil ausgebildet. Dabei bilden die beiden Rahmenquerelemente 12, 14 jeweils ein C-Profil aus. Grundsätzlich ist es auch denkbar, dass lediglich eines der Rahmenquerelemente 12, 14 ein C-Profil ausbildet, wobei das andere Rahmenquerelement 12, 14 ein anders geöffnetes Profil, wie beispielsweise ein T-Profi, ein Z-Profil oder ein L-Profil ausbildet. Die Rahmenquerelemente 12, 14 sind dabei als Strangpressprofile ausgebildet. Grundsätzlich ist es auch denkbar, dass die beiden Rahmenquerelemente 12, 14 mittels eines anderen Herstellungsverfahrens hergestellt sind. Grundsätzlich ist es auch denkbar, dass das als C-Profil ausgebildete Rahmenquerelement 12, 14 von zwei miteinander verbundenen L-Profilen gebildet ist. Dabei ist es denkbar, dass zwei L-Profile, beispielsweise über Schraubverbindungen, Nietverbindungen oder eine Klebeverbindung, miteinander zu einem C-Profil gekoppelt sind.

Die Rahmenquerelemente 12, 14 bilden jeweils eine Oberseite 50, 52, die in einem montierten Zustand dem Kabinenboden 44 abgewandt ist, eine Unterseite 54, 56, die in montiertem Zustand dem Kabinenboden 44 zugewandt ist, und einen Seitenbereich 58, 60 aus, der die Oberseite 50, 52 mit der Unterseite 54, 56 verbindet. Die Oberseite 50, 52, die Unterseite 54, 56 und der Seitenbereich 58, 60 eines Rahmenquerelements 12, 14 sind dabei jeweils einstückig miteinander ausgebildet. Die Rahmenquerelemente 12, 14 weisen an der Oberseite 50, 52 und an der Unterseite 54, 56 jeweils ein Lochmuster zur Anbindung von weiteren Elementen auf. Die Lochmuster an der Oberseite 50, 52 und der Unterseite 54, 56 des jeweiligen Rahmenquerelements 12, 14 sind dabei jeweils identisch zueinander ausgebildet. Grundsätzlich ist es auch denkbar, dass das Lochmuster an der Oberseite 50, 52 eines Rahmenquerelements 12, 14 anders ausgebildet ist als ein Lochmuster auf der Unterseite 54, 56 des entsprechenden Rahmenquerelements 12, 14.

Zur Verbindung der beiden Rahmenquerelemente 12, 14 weist die Flugzeugsitzrahmenvorrichtung 10 ein ersten Rahmenlängselement 16 auf. Das erste Rahmenlängselement 16 verbindet die beiden Rahmenquerelemente 12, 14 an ersten Enden der Rahmenquerelemente 12, 14 miteinander. Das Rahmenlängselement 16 weist dabei im Wesentlichen eine gleiche Höhe auf wie die Rahmenquerelemente 12, 14. Dadurch bilden das Rahmenlängselement 16 und die Rahmenquerelemente 12, 14 im montierten Zustand jeweils eine im Wesentlichen ebene Oberseite und Unterseite aus. Das Rahmenlängselement 16 steht dabei in montiertem Zustand in einem Winkel von ungleich 90 Grad zu den Rahmenquerelementen 12, 14. Das Rahmenlängselement 16 ist schräg zu den Rahmenquerelementen 12, 14 ausgerichtet. Zur Anbindung des Rahmenlängselements 16 an die beiden Rahmenquerelemente 12, 14 weisen die beiden Rahmenquerelemente 12, 14 an ihrer Oberseite 50, 52 und ihrer Unterseite 54, 56 jeweils nicht näher dargestellte Durchgangslöcher auf. Das Rahmenlängselement 16 bildet an seinen Enden jeweils einen Anbindungsbereich 64, 66 aus. In den Anbindungsbereichen 64, 66 weist das Rahmenlängselement 16 jeweils Taschen auf, die an einer Oberseite und an einer Unterseite des Rahmenlängselements 16 angeordnet sind. Durch die Taschen weist das Rahmenlängselement 16 im Bereich der Anbindungsbereiche 64, 66 eine Höhe auf, die kleiner ist als die Höhe der Rahmenquerelemente 12, 14. Die Höhe des Rahmenlängselements 16 ist im Bereich der Anbindungsbereiche 64, 66 insbesondere kleiner als ein Abstand zwischen einander zugewandten Innenseiten der Oberseite 50, 52 und der Unterseite 54, 56 des jeweiligen Rahmenquerelements 12, 14. Dadurch können die Anbindungsbereiche 64, 66 des Rahmenquerelements 12, 14 zur Verbindung mit den Rahmenquerelementen 12, 14 in die Rahmenquerelemente 12, 14 zwischen die jeweilige Oberseite 50, 52 und die Unterseite 54, 56 eingeschoben werden. Zur Anbindung weist das Rahmenlängselement 16 in den Anbindungsbereichen 64, 66 jeweils zwei nicht näher dargestellte Durchgangslöcher auf. Die Durchgangslöcher der Anbindungsbereiche 64, 66 des Rahmenlängselements 16 und die Durchgangslöcher der Rahmenquerelemente 12, 14 sind in montiertem Zustand fluchtend ausgebildet. Zur Verbindung des Rahmenlängselements 16 mit den Rahmenquerelementen 12, 14 weist die Flugzeugsitzrahmenvorrichtung 10 acht Verbindungselemente 68 auf, die jeweils durch ein Durchgangsloch der Anbindungsbereiche 64, 66 des Rahmenlängselements 16 und durch ein Durchgangsloch eines der Rahmenquerelemente 12, 14 geführt und dort befestigt ist. Über die Verbindungselemente 68 sind das Rahmenlängselement 16 und die Rahmenquerelemente 12, 14 fest miteinander verbunden. Die Verbindungselemente 68, von denen in den Zeichnungen der besseren Übersichtlichkeit halber lediglich eines bezeichnet ist, sind dabei als Nieten ausgebildet. Die Rahmenquerelemente 12, 14 und das Rahmenlängselement 16 sind über die Verbindungselemente 68 miteinander vernietet.

Zur Verbindung der beiden Rahmenquerelemente 12, 14 weist die Flugzeugsitzrahmenvorrichtung 10 ein zweites Rahmenlängselement 18 auf. Das zweite Rahmenlängselement 18 verbindet die beiden Rahmenquerelemente 12, 14 in einem mittleren Bereich der Rahmenquerelemente 12, 14 miteinander. Das zweite Rahmenlängselement 18 weist dabei im Wesentlichen eine gleiche Höhe auf wie die Rahmenquerelemente 12, 14. Dadurch bilden die Rahmenlängselemente 16, 18 und die Rahmenquerelemente 12, 14 im montierten Zustand jeweils eine im Wesentlichen ebene Oberseite und Unterseite aus. Das zweite Rahmenlängselement 18 steht dabei in montiertem Zustand in einem rechten Winkel zu den Rahmenquerelementen 12, 14. Das Rahmenlängselement 18 weist zwei nicht näher dargestellte Anbindungsbereiche auf. Die Anbindungsbereiche sind im Wesentlichen identisch zu den Anbindungsbereichen 64, 66 des ersten Rahmenlängselements 16 ausgebildet. Die Anbindungsbereiche des zweiten Rahmenlängselements 18 weisen ebenfalls eine geringere Höhe auf als die Rahmenquerelemente 12, 14 und sind zwischen der jeweiligen Oberseite 50, 52 und der jeweiligen Unterseite 54, 56 des jeweiligen Rahmenquerelements 12, 14 angeordnet. Die Anbindungsbereiche des zweiten Rahmenlängselements 18 und die Rahmenquerelemente 12, 14 weisen jeweils nicht näher dargestellte Durchgangslöcher auf, über die die Rahmenquerelemente 12, 14 jeweils über nicht näher dargestellte, als Nieten ausgebildete Verbindungselemente mit dem zweiten Rahmenlängselement 18 verbunden sind.

Zur Verbindung der beiden Rahmenquerelemente 12, 14 weist die Flugzeugsitzrahmenvorrichtung 10 ein drittes Rahmenlängselement 62 auf. Das dritte Rahmenlängselement 62 verbindet die beiden Rahmenquerelemente 12, 14 an zweiten Enden der Rahmenquerelemente 12, 14 miteinander. Das dritte Rahmenlängselement 62 weist dabei im Wesentlichen eine gleiche Höhe auf wie die Rahmenlängselemente 16, 18. Dadurch bilden die Rahmenlängselemente 16, 18, 62 und die Rahmenquerelemente 12, 14 im montierten Zustand jeweils eine im Wesentlichen ebene Oberseite und Unterseite aus. Das dritte Rahmenlängselement 62 steht dabei in montiertem Zustand in einem rechten Winkel zu den Rahmenquerelementen 12, 14. Das Rahmenlängselement 62 weist zwei Anbindungsbereiche 72, 74 auf. Die Anbindungsbereiche 72, 74 des dritten Rahmenlängselements 62 sind im Wesentlichen identisch zu den Anbindungsbereichen 64, 66 des ersten Rahmenlängselements 16 bzw. den Anbindungsbereichen des zweiten Rahmenlängselements 18 ausgebildet. Die Anbindungsbereiche 72, 74 des dritten Rahmenlängselements 62 weisen ebenfalls eine geringere Höhe auf als die Rahmenquerelemente 12, 14 und sind zwischen der jeweiligen Oberseite 50, 52 und der jeweiligen Unterseite 54, 56 des jeweiligen Rahmenquerelements 12, 16 angeordnet. Die Anbindungsbereiche 72, 74 des dritten Rahmenlängselements 62 und die Rahmenquerelemente 12, 14 weisen jeweils nicht näher dargestellte Durchgangslöcher auf, über die die Rahmenquerelemente 12, 14 jeweils über nicht näher dargestellte, als Nieten ausgebildete Verbindungselemente mit dem dritten Rahmenlängselement 62 verbunden sind.

Das zweite Rahmenlängselement 18 weist dabei in montiertem Zustand einen ersten Abstand zu dem ersten Rahmenlängselement 16 und einen zweiten Abstand zu dem dritten Rahmenlängselement 62 auf. Dabei sind der erste Abstand zwischen dem ersten Rahmenlängselement 16 und dem zweiten Rahmenlängselement 18 und der zweite Abstand zwischen dem zweiten Rahmenlängselement 18 und dem dritten Rahmenlängselement 62 unterschiedlich groß. Zur Ausbildung unterschiedlicher Sitzkonfigurationen können die Rahmenlängselemente 16, 18, 62 in unterschiedlichen Abständen zueinander mit den Rahmenquerelementen 12, 14 verbunden werden, die sich von dem ersten und zweiten Abstand, der oben beschrieben wurde, unterscheiden. Dabei ist es auch denkbar, dass die Rahmenquerelemente 12, 14 zur Ausbildung unterschiedlicher Sitzkonfigurationen unterschiedliche Längserstreckungen aufweisen.

Beispielhaft sollen im Folgenden drei unterschiedliche Sitzkonfigurationen beschrieben werden, um den Sachverhalt zu verdeutlichen. Eine erste Sitzkonfiguration, deren Teil die Flugzeugsitzrahmenvorrichtung 10 ist, könnte einen ersten großen Flugzeugsitz und ein großes Shellelement umfassen, wodurch mit dieser Sitzkonfiguration ein großer Flugzeugsitzbereich bereitgestellt werden kann. Die Rahmenquerelemente 12, 14 weisen dabei eine Länge X auf. Das erste Rahmenlängselement 16 und das dritte Rahmenlängselement 62 sind jeweils an den Enden der Rahmenquerelemente12, 14 angebunden. Das zweite Rahmenelement 18 ist in dem mittleren Bereich der Rahmenquerelemente 12, 14 angebunden und weist einen Abstand Y zu dem ersten Rahmenlängselement 16 auf und einen Abstand Z zu dem dritten Rahmenlängselement 62.

Eine zweite Sitzkonfiguration, deren Teil die Flugzeugsitzrahmenvorrichtung 10 ist, könnte einen ersten mittleren Flugzeugsitz und ein großes Shellelement umfassen, wodurch mit dieser Sitzkonfiguration ein großer Flugzeugsitzbereich bereitgestellt werden kann. Die Rahmenquerelemente 12, 14 weisen dabei eine Länge X auf, die der Länge X der Rahmenelemente 12, 14 aus der ersten Sitzkonfiguration entspricht. Das erste Rahmenlängselement 16 und das dritte Rahmenlängselement 62 sind jeweils an den Enden der Rahmenquerelemente12, 14 angebunden. Das zweite Rahmenelement 18 ist in dem mittleren Bereich der Rahmenquerelemente 12, 14 angebunden und weist einen Abstand A zu dem ersten Rahmenlängselement 16 auf und einen Abstand B zu dem dritten Rahmenlängselement 62. Dabei ist der Abstand A zwischen dem ersten Rahmenlängselement 16 und dem zweiten Rahmenlängselement 18 größer als der Abstand Y zwischen dem ersten Rahmenlängselement 16 und dem zweiten Rahmenlängselement 18 aus der ersten Sitzkonfiguration. Der Abstand B zwischen dem zweiten Rahmenlängselement 18 und dem dritten Rahmenlängselement 62 ist dabei kleiner als der Abstand Z zwischen dem zweiten Rahmenlängselement 18 und dem dritten Rahmenlängselement 62 aus der ersten Sitzkonfiguration.

Eine dritte Sitzkonfiguration, dessen Teil die Flugzeugsitzrahmenvorrichtung 10 ist, könnte einen ersten kleinen Flugzeugsitz und ein kleines Shellelement umfassen, wodurch mit dieser Sitzkonfiguration ein kleinerer Flugzeugsitzbereich bereitgestellt werden kann. Die Rahmenquerelemente 12, 14 weisen dabei eine Länge C auf, die kleiner ist als die Länge X der Rahmenquerelemente 12, 14 aus der ersten Sitzkonfiguration. Das erste Rahmenlängselement 16 und das dritte Rahmenlängselement 62 sind jeweils an den Enden der Rahmenquerelemente 12, 14 angebunden. Das zweite Rahmenelement 18 ist in dem mittleren Bereich der Rahmenquerelemente12, 14 angebunden und weist einen Abstand D zu dem ersten Rahmenlängselement 16 auf und einen Abstand E zu dem dritten Rahmenlängselement 62. Dabei ist der Abstand D zwischen dem ersten Rahmenlängselement 16 und dem zweiten Rahmenlängselement 18 kleiner als der Abstand Y zwischen dem ersten Rahmenlängselement 16 und dem zweiten Rahmenlängselement 18 aus der ersten Sitzkonfiguration. Der Abstand C zwischen dem zweiten Rahmenlängselement 18 und dem dritten Rahmenlängselement 62 ist dabei kleiner als der Abstand Z zwischen dem zweiten Rahmenlängselement 18 und dem dritten Rahmenlängselement 62 aus der ersten Sitzkonfiguration.

Durch die unterschiedlichen Abstände zwischen den Rahmenlängselementen 16, 18, 62 und die unterschiedlichen Längen der Rahmenquerelementen 12, 14 in den unterschiedlichen Sitzkonfigurationen können einfach unterschiedliche Sitzkonfigurationen mit unterschiedlich großen Flugzeugsitzen und Shellelementen bereitgestellt werden, ohne dass konstruktive Änderungen an den Rahmenlängselementen 16, 18, 62 oder den Rahmenquerelementen 12, 14 vorgenommen werden müssten. Die Rahmenlängselemente 16, 18, 62 sind für die unterschiedlichen Sitzkonfigurationen identisch ausgebildet. Darunter ist zu verstehen, dass das Rahmenlängselement 16, das die Rahmenquerelemente 12, 14 an den ersten Enden verbindet, in allen Sitzkonfigurationen gleich ausgebildet ist, dass das dritte Rahmenlängselement 62, das die Rahmenquerelemente 12, 14 an den zweiten Enden verbindet, in allen Sitzkonfigurationen gleich ausgebildet ist und dass das zweite Rahmenlängselement 18, das die Rahmenquerelemente 12, 14 in einem mittleren Bereich verbindet, gleich ausgebildet ist. Die Rahmenlängselemente 16, 18, 62 sind unabhängig von ihren unterschiedlichen Abständen zueinander in den verschiedenen Sitzkonfigurationen identisch ausgebildet. Dabei sind die Lochmuster in den Rahmenquerelementen 12, 14, die die Durchgangslöcher zum Anbinden der Rahmenlängselemente 16, 18, 62 ausbilden, für die unterschiedlichen Sitzkonfigurationen unterschiedlich ausgebildet. Grundsätzlich ist es auch denkbar, dass die Lochmuster in den Rahmenquerelementen 12, 14 für die unterschiedlichen Sitzkonfigurationen gleich ausgebildet sind, wodurch insbesondere Herstellungskosten der Rahmenquerelemente 12, 14 für unterschiedliche Sitzkonfigurationen reduziert werden können. Die drei unterschiedlichen Sitzkonfigurationen sind dabei lediglich beispielhaft genannt. Unterschiedliche Sitzkonfigurationen können beispielsweise aus unterschiedlichen Sitzschienenwinkeln in unterschiedlichen Flugzeugtypen resultieren, durch die eine Anordnung der Rahmenlängselemente 16, 18, 62 zu den Rahmenquerelementen 12, 14 zur optimalen Lastverteilung angepasst werden muss. Für Sitzkonfigurationen mit unterschiedlich großen Flugzeugsitzen unterscheiden sich vorzugsweise sowohl die Länge der Rahmenquerelementen 12, 14 als auch die Abstände zwischen den Rahmenlängselementen 16, 18, 62. Dabei können unterschiedliche Sitzkonfigurationen auch durch eine gespiegelte Anordnung des Flugzeugsitzes zu dem Shellelement 46 dargestellt sein. Dabei ist der Flugzeugsitz für eine geschachtelte Anordnung von Flugzeugsitzbereichen in einem Flugzeug auf einer Seite angeordnet, die derjenigen in dem gezeigten Ausführungsbeispiel gegenüberliegt.

Die Flugzeugsitzrahmenvorrichtung 10 umfasst vier Kabinenbodenbefestigungselemente 20, 22, 24, 26. Die Kabinenbodenbefestigungselemente 20, 22, 24, 26 sind in montiertem Zustand fest mit den Rahmenquerelementen 12, 14 verbunden. Dabei sind zwei Kabinenbodenbefestigungselemente 20, 22 mit dem vorderen, ersten Rahmenquerelement 12 verbunden. Zwei Kabinenbodenbefestigungselemente 24, 26 sind mit dem hinteren, zweiten Rahmenquerelement 14 verbunden. Die Kabinenbodenbefestigungselemente 20, 22, 24, 26 weisen jeweils eine nicht näher dargestellte und beschriebene Aufnahme auf. Die Flugzeugsitzrahmenvorrichtung 10 umfasst zwei erste Fittings 76, 78, die mit den zwei Kabinenbodenbefestigungselementen 20, 22 gekoppelt sind, die an dem Rahmenquerelement 12 angebunden sind. Die ersten Fittings 76, 78 weisen ein Formschlusselement auf, das dazu vorgesehen ist, in einer Befestigungsschiene des Kabinenbodens formschlüssig angeordnet zu werden. Die Kabinenbodenbefestigungselemente 20, 22 erstrecken sich dabei in einem montierten Zustand schräg nach vorne, also in Flugrichtung von dem Rahmenquerelement 12 weg. Die Flugzeugsitzrahmenvorrichtung 10 umfasst zwei zweite Fittings 80, 82, die mit den zwei Kabinenbodenbefestigungselementen 24, 26 gekoppelt sind, die an dem Rahmenquerelement 14 angebunden sind. Die zweiten Fittings 80, 82 weisen ein Formschlusselement auf, das dazu vorgesehen ist, in einer Befestigungsschiene des Kabinenbodens formschlüssig angeordnet zu werden. Dabei umfassen die zweiten Fittings 80, 82 nicht näher dargestellte Verriegelungseinheiten, mit denen die Fittings 80, 82 jeweils in den Befestigungsschienen axial verriegelt werden können, wodurch die Flugzeugsitzrahmenvorrichtung 10 an dem Kabinenboden fest fixiert werden kann. Die Kabinenbodenbefestigungselemente 24, 26 erstrecken sich dabei in einem montierten Zustand schräg nach hinten, also entgegen der Flugrichtung von dem Rahmenquerelement 14 weg. Durch die schräge Erstreckung der Kabinenbodenbefestigungselemente 20, 22, 24, 26 kann die Flugzeugsitzrahmenvorrichtung 10 einfach schräg zu der Flugrichtung ausgerichtet werden. Zur Anbindung der Kabinenbodenbefestigungselemente 20, 22, 24, 26 weisen die Rahmenquerelemente 12, 14 in ihren Seitenbereichen jeweils nicht näher dargestellte Durchgangslöcher auf. Über die Durchgangslöcher in den Seitenbereichen 58, 60 der Rahmenquerelemente 12, 14 und über Durchgangslöcher in den Kabinenbodenbefestigungselementen 20, 22, 24, 26 werden die Kabinenbodenbefestigungselemente 20, 22, 24, 26 jeweils über Verbindungselemente fest mit den Rahmenquerelementen 12, 14 verbunden. Dabei sind die Verbindungselemente als Schrauben ausgebildet. Die Kabinenbodenbefestigungselemente 20, 22, 24, 26 sind über Schraubenverbindungen mit den Rahmenquerelementen 12, 14 verbunden. Grundsätzlich ist es auch denkbar, dass die Kabinenbodenbefestigungselemente 20, 22, 24, 26 über Nietverbindungen fest mit den Rahmenquerelementen 12, 14 verbunden sind. Grundsätzlich ist es auch denkbar, dass die Kabinenbodenbefestigungselemente 20, 22, 24, 26 auch stoffschlüssig mit den Rahmenquerelementen 12, 14 verbunden sind, wie beispielsweise über eine Schweißverbindung oder eine Klebeverbindung.

Zur Ausbildung der unterschiedlichen Sitzkonfigurationen können die Kabinenbodenbefestigungselemente 20, 22, 24, 26 unterschiedliche Längen und Neigungswinkel aufweisen. Durch die Ausbildung der Kabinenbodenbefestigungselemente 20, 22, 24, 26 als einfach an die Rahmenquerelemente 12, 14 anzubringende Elemente können einfach Befestigungen für unterschiedliche Sitzkonfigurationen bereitgestellt werden.

Zur Anbindung des Shellelements 46 an die Rahmenquerelemente 12, 14 und die Rahmenlängselemente 16, 18, 62 weist die Flugzeugsitzrahmenvorrichtung 10 fünf Aufbauanbindungsmodule 28, 30, 32, 34, 36 auf. Grundsätzlich ist es auch denkbar, dass die Flugzeugsitzrahmenvorrichtung 10 eine andere Anzahl an Aufbauanbindungsmodulen 28, 30, 32, 34, 36 aufweist. Die Aufbauanbindungsmodule 28, 30, 32, 34, 36 sind fest mit den Rahmenquerelementen 12, 14 und den Rahmenlängselementen 16, 18, 62 verbunden. Das erste Aufbauanbindungsmodul 28 ist auf dem ersten Rahmenquerelement 12 an der ersten Seite angebracht. Das zweite Aufbauanbindungsmodul 30 ist auf dem ersten Rahmenlängselement 16 angebracht. Das dritte Aufbauanbindungsmodul 32 ist an dem zweiten Rahmenquerelement 14 in einem mittleren Bereich angebracht. Zur Anbindung des vierten Aufbauanbindungsmoduls 34 weist die Flugzeugsitzrahmenvorrichtung 10 ein Zusatzelement 84 auf. Das Zusatzelement 84 ist an dem zweiten Rahmenquerelement 14 an dem zweiten Ende angebracht und erstreckt sich entgegen der Flugrichtung nach hinten von dem Rahmenquerelement 14 weg. Das vierte Aufbauanbindungsmodul 34 ist fest auf dem Zusatzelement 84 angebracht. Das fünfte Aufbauanbindungsmodul 36 ist an dem ersten Rahmenquerelement 12 an dem zweiten Ende angebracht. Dabei sind die Aufbauanbindungsmodule 28, 30, 32, 34, 36 jeweils mittels Verbindungselementen und Durchgangslöchern, die von den Lochmustern der Rahmenquerelemente 12, 14 gebildet werden, fest an den Rahmenquerelementen 12, 14 angebracht. Die Verbindungselemente sind dabei als Nieten ausgebildet. Grundsätzlich ist es auch denkbar, dass die Verbindungselemente beispielsweise als Schrauben ausgebildet sind. Von den fünf Aufbauanbindungsmodulen 28, 30, 32, 34, 36 sollen im Folgenden lediglich die zwei Aufbauanbindungsmodule 28, 30 näher beschrieben werden. Die anderen Aufbauanbindungsmodule 32, 34, 36 sind, abhängig von einer Sitzkonfiguration, entsprechend dem ersten Aufbauanbindungsmodul 28 oder entsprechend dem zweiten Aufbauanbindungsmodul 30 ausgebildet. Grundsätzlich ist es auch denkbar, dass die Aufbauanbindungsmodule 32, 34, 36 auch stoffschlüssig mit den Rahmenquerelementen 12, 14 verbunden sind, wie beispielsweise über eine Schweißverbindung oder eine Klebeverbindung.

Das Aufbauanbindungsmodul 28 ist zum Ausgleich von Bewegungen des Shellelements 46 zu der Flugzeugsitzrahmenvorrichtung 10 vorgesehen. Das Aufbauanbindungsmodul 28 umfasst einen Grundkörper 86. Der Grundkörper 86 weist einen T-förmigen Querschnitt auf. Der Grundkörper 86 weist in seinen äußeren Bereichen jeweils ein Durchgangsloch auf, durch das zur Verbindung mit dem entsprechenden Rahmenquerelement 12 ein als Niet ausgebildetes Verbindungselement 88 geführt ist. In einem Mittelbereich bildet der Grundkörper 86 einen Steg 92 aus. Der Steg 92 bildet eine Aufnahme 94 aus, die in einem montierten Zustand horizontal ausgerichtet ist. Das Aufbauanbindungsmodul 28 umfasst ein Schwenkelement 90. Das Schwenkelement 90 weist einen U-förmigen Querschnitt auf. In montiertem Zustand umgreift das U-förmige Schwenkelement 90 den Steg 92 auf zwei Seiten. Mit Innenflächen liegt das U-förmige Schwenkelement 90 an dem Steg 92 an, wodurch das U-förmige Schwenkelement 90 immer parallel zu dem Steg 92 augerichtet ist. In seinen Seitenschenkeln weist das U-förmige Schwenkelement 90 jeweils eine Aufnahme auf. Über die Aufnahmen des U-förmigen Schwenkelements 90 und die Aufnahme 94 des Stegs 92 ist das U-förmige Schwenkelement 90 über eine Verbindungsschraube 102 fest und schwenkbar mit dem Grundkörper 86 verbunden. Die Verbindungsschraube 102 bildet eine Ausgleichsachse 70 aus. Die Verbindungschraube 102 ist über eine Mutter 124 fest mit dem U-förmigen Schwenkelement 90 gekoppelt Zu der Ausgleichsachse 70 kann das U-förmige Schwenkelement 90 zu dem Grundkörper 86 verdreht werden. An seiner Unterseite bildet das U-förmige Schwenkelement 90 Begrenzungselemente 96 aus, die einen Schwenkwinkel des U-förmigen Schwenkelements 90 zu dem Grundkörper 86 auf 3 Grad begrenzen. Dazu bildet der Grundkörper 86 Anschlagsflächen 98 aus, an die die Begrenzungselemente 96 bei Erreichen eines maximalen Schwenkwinkels auftreffen und so ein weiteres Verschwenken verhindern. Dadurch kann einfach und vorteilhaft ein maximaler Schwenkwinkel des Aufbauanbindungsmoduls 28 begrenzt werden. Das Aufbauanbindungsmodul 28 umfasst eine Befestigungsschraube 100. Die Befestigungsschraube 100 ist zur Anbindung des Shellelements 46 an das Aufbauanbindungsmodul 28 vorgesehen. Die Befestigungsschraube 100 ist mit ihrem Kopf in einem Innenbereich des U-förmigen Schwenkelements 90 angeordnet und erstreckt sich nach oben hin von dem Grundkörper 86 des Aufbauanbindungsmoduls 28 weg. Die Befestigungsschraube 100 ist dabei als eine Sechskantschraube ausgebildet. Dabei ist die Befestigungsschraube 100 in dem U-förmigen Schwenkelement 90 gekontert. Mit Außenflächen eines Kopfs liegt die Befestigungsschraube 100 an Innenseiten des U-förmigen Schwenkelements 90 an. Dadurch ist die Befestigungsschraube 100 gegen ein Verdrehen gesichert. Die Befestigungsschraube 100 ist verdrehsicher in dem U-förmigen Schwenkelement 90 angeordnet. In eine Oberseite des U-förmigen Schwenkelements 90 ist ein Durchgangsloch eingebracht, durch das die Befestigungsschraube 100 geführt ist. Das Durchgangsloch ist für einen Toleranzausgleich als ein Langloch ausgebildet. Die Befestigungsschraube 100 erstreckt sich bis über das Schwenkelement 90 hinaus. Über die Befestigungsschraube 100 ist das Shellelement 46 fest mit dem Aufbauanbindungsmodul 28 verschraubt. In einem montierten Zustand, in dem das Shellelement 46 über das Aufbauanbindungsmodul 28 mit dem Flugzeugsitzrahmenelement 10 verbunden ist, kann das Aufbauanbindungsmodul 28 über die Ausgleichsachse 70 eine Ausgleichsbewegung zwischen dem Shellelement 46 und der Flugzeugsitzrahmenvorrichtung 10 zulassen.

Das Aufbauanbindungsmodul 30 ist zum Ausgleich von Bewegungen des Shellelements 46 zu der Flugzeugsitzrahmenvorrichtung 10 vorgesehen. Dabei ist das Aufbauanbindungsmodul 30 zum Ausgleich von Bewegungen in zwei Richtungen vorgesehen. Das Aufbauanbindungsmodul 30 umfasst einen Grundkörper 104. Der Grundkörper 104 ist im Wesentlichen gleich ausgebildet wie der Grundkörper 86 des Aufbauanbindungselements 28. Dabei weist der Grundkörper 104 des Aufbauanbindungsmoduls 30 im Gegensatz zu dem Grundkörper 86 des Aufbauanbindungselements 28 keine Anschlagsflächen 98 auf.

In einem Mittelbereich bildet der Grundkörper 104 einen Steg 106 aus. Der Steg 106 bildet eine Aufnahme 94 aus, die in einem montierten Zustand horizontal ausgerichtet ist. Das Aufbauanbindungsmodul 30 umfasst ein U-förmiges Schwenkelement 108. Das U-förmige Schwenkelement 108 ist im Wesentlichen gleich ausgebildet wie das U-förmige Schwenkelement 90 des ersten Aufbauanbindungsmoduls 28. Das Aufbauanbindungsmodul 30 umfasst eine Verbindungsschraube 110, über die das U-förmige Schwenkelement 108 mit dem Grundkörper 104 schwenkbar gekoppelt ist. Dabei weist das Aufbauanbindungsmodul 30 keine Schwenkbegrenzung auf. Die Verbindungsschraube 110 bildet ebenfalls eine Ausgleichsachse 70 aus. Das Aufbauanbindungsmodul 30 ist zu einer Ausgleichsbewegung um eine Schwenkachse vorgesehen, die senkrecht zu der Ausgleichsachse 70 ausgerichtet ist. Dazu weist das U-förmige Schwenkelement 108 an seinen Innenseiten jeweils zwei Schrägflächen 112, 114, 116, 118 auf. Durch die Schrägflächen 112, 114, 116, 118 kann das Aufbauanbindungsmodul 30 zusätzlich zu der Schwenkbewegung um die Ausgleichsachse 70 eine Ausgleichsbewegung senkrecht zu der Ausgleichsachse 70 ausführen, indem das U-förmige Schwenkelement 108 zu dem Steg 106 des Grundkörpers 104 verkippt wird. Ist das U-förmige Schwenkelement 108 zu dem Steg 106 des Grundkörpers 104 verkippt, so ist das U-förmige Schwenkelement 108 nicht mehr parallel zu dem Steg 106 des Grundkörpers 104 ausgerichtet. Dabei ist das U-förmige Schwenkelement 108 zu dem Steg 106 des Grundkörpers 104 um 3 Grad verkippbar. Dadurch kann das Aufbauanbindungsmodul 30 Ausgleichsbewegungen in zwei Richtungen ausführen. Das Aufbauanbindungsmodul 30 weist wie das erste Aufbauanbindungsmodul 28 eine Befestigungsschraube 120 auf, die äquivalent zu der Befestigungsschraube 100 des Aufbauanbindungsmoduls 28 ausgebildet und äquivalent in das Aufbauanbindungsmodul 30 eingebracht ist. Über die Befestigungsschraube 120 ist das Shellelement 46 mit dem Aufbauanbindungsmodul 30 verbunden.

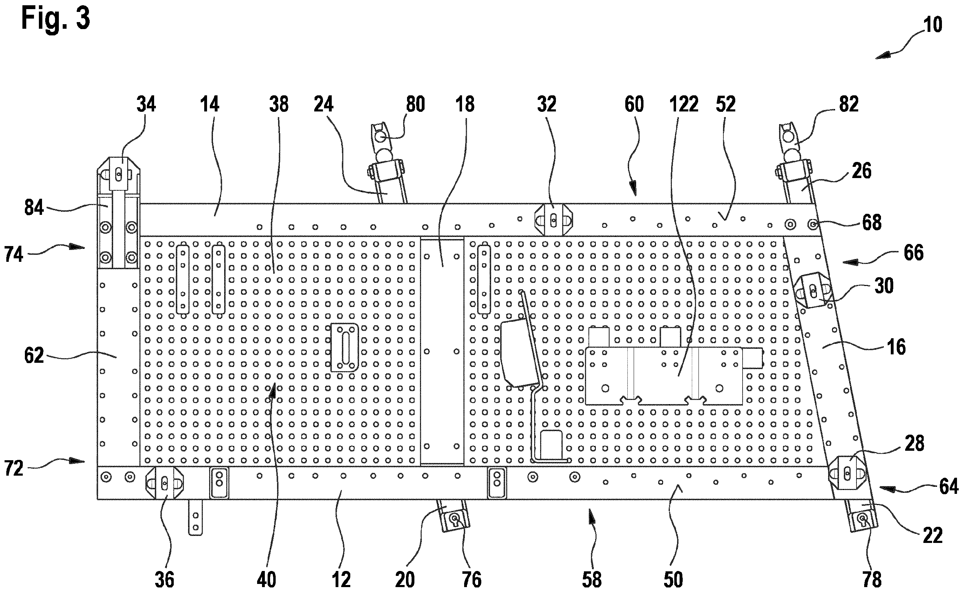

Die Flugzeugsitzrahmenvorrichtung umfasst eine Bodenplatte 38. Die Bodenplatte 38 ist an einer Unterseite der Rahmenquerelemente 12, 14 und der Rahmenlängselemente 16, 18 angebracht. Die Bodenplatte 38 ist dabei fest mit den Rahmenquerelementen 12, 14 vernietet. Die Bodenplatte 38 ist dazu vorgesehen, dass Elemente 122 der Flugzeugsitzrahmenvorrichtung 10 oder der Flugzeugsitzvorrichtung an ihr befestigt werden. Die Elemente 122 sind zur Anbindung von Elektronikbauteilen und anderen Elementen an die Flugzeugsitzrahmenvorrichtung 10 vorgesehen, wobei in Figur 3 lediglich ein Element 122 angezogen ist. Durch Lochmuster 40 ist dabei eine flexible Anbindungsmöglichkeit der Elemente 122 gegeben, wobei insbesondere im Hinblick auf die verschiedenen Sitzkonfigurationen eine flexibel anzupassende Anbringung von Elektronikbauteilen und anderen Elementen erreicht werden kann. Die Bodenplatte 38 weist ein Lochmuster 40 auf. Über das Lochmuster 40 können die verschiedenen Elemente 122 an die Bodenplatte 38 angebracht werden, beispielsweise durch eine Vernietung. Ebenfalls können durch das Lochmuster 40 der Bodenplatte 38 Verkabelungen einer Elektronik verlegt werden. Die Bodenplatte 38 erstreckt sich dabei in einem gesamten Raum zwischen den Rahmenquerelementen 12, 14. Die Bodenplatte 38 mit ihrem Lochmuster 40 kann bei allen unterschiedlichen Sitzkonfigurationen eingesetzt werden, da die Elemente 122 variabel an das Lochmuster 40 angebracht werden können.

### Bezugszeichen

- 10: Flugzeugsitzrahmenvorrichtung
- 12: Rahmenquerelement
- 14: Rahmenquerelement
- 16: Rahmenlängselement
- 18: Rahmenlängselement
- 20: Kabinenbodenbefestigungselement
- 22: Kabinenbodenbefestigungselement
- 24: Kabinenbodenbefestigungselement
- 26: Kabinenbodenbefestigungselement
- 28: Aufbauanbindungsmodul
- 30: Aufbauanbindungsmodul
- 32: Aufbauanbindungsmodul
- 34: Aufbauanbindungsmodul
- 36: Aufbauanbindungsmodul
- 38: Bodenplatte
- 40: Lochmuster
- 42: Flugzeugsitzvorrichtung
- 44: Kabinenboden
- 46: Shellelement
- 48: Flugzeugsitzbereich
- 50: Oberseite
- 52: Oberseite
- 54: Unterseite
- 56: Unterseite
- 58: Seitenbereich
- 60: Seitenbereich
- 62: Rahmenlängselement
- 64: Anbindungsbereich
- 66: Anbindungsbereich
- 68: Verbindungselement
- 70: Ausgleichsachse
- 72: Anbindungsbereich
- 74: Anbindungsbereich
- 76: Fitting
- 78: Fitting
- 80: Fitting
- 82: Fitting
- 84: Zusatzelement
- 86: Grundkörper
- 88: Verbindungselement
- 90: Schwenkelement
- 92: Steg
- 94: Aufnahme
- 96: Begrenzungselement
- 98: Anschlagsfläche
- 100: Befestigungsschraube
- 102: Verbindungsschraube
- 104: Grundkörper
- 106: Steg
- 108: Schwenkelement
- 110: Verbindungsschraube
- 112: Schrägfläche
- 114: Schrägfläche
- 116: Schrägfläche
- 118: Schrägfläche
- 120: Befestigungsschraube
- 122: Element
- 124: Mutter

## Patentansprüche

1. Flugzeugsitzrahmenvorrichtung, die einen Grundrahmen einer Flugzeugsitzvorrichtung ausbildet und zur Aufständerung eines Flugzeugsitzes und eines Shellelements (46) in einem montierten Zustand auf einem Kabinenboden (44) eines Flugzeugs vorgesehen ist, mit zumindest einem ersten Rahmenquerelement (12), das eine breite Seite des Grundrahmens ausbildet, und zumindest einem beabstandet dazu angeordneten zweiten Rahmenquerelement (14), das eine breite Seite des Grundrahmens ausbildet, wobei die beiden Rahmenquerelemente (12, 14) miteinander verbunden sind, wobei zumindest eines der Rahmenquerelemente (12, 14) als ein geöffnetes Profil ausgebildet ist, mit wenigstens einem Aufbauanbindungsmodul (28, 30, 32, 34, 36), das in einem montierten Zustand fest mit einem der Rahmenquerelemente (12, 14) verbunden und zur Anbindung des Shellelements (46) vorgesehen ist, **dadurch gekennzeichnet, dass** das Aufbauanbindungsmodul (28, 30, 32, 34, 36) dazu vorgesehen ist, wenigstens um eine Ausgleichsachse (70) schwenkbar zu sein, um eine Ausgleichsbewegung des Shellelements (46) zuzulassen.

2. Flugzeugsitzrahmenvorrichtung nach Anspruch 1, **dadurch gekennzeichnet, dass** beide Rahmenquerelemente (12, 14) als ein geöffnetes Profil ausgebildet sind.

3. Flugzeugsitzrahmenvorrichtung nach Anspruch 1 oder 2, **dadurch gekennzeichnet, dass** wenigstens eines der Rahmenquerelemente (12, 14) als ein C-Profil ausgebildet ist.

4. Flugzeugsitzrahmenvorrichtung nach einem der vorhergehenden Ansprüche, **dadurch gekennzeichnet, dass** die Rahmenquerelemente (12, 14) als Strangpressprofile ausgebildet sind.

5. Flugzeugsitzrahmenvorrichtung nach einem der vorhergehenden Ansprüche, **gekennzeichnet durch** zumindest zwei Rahmenlängselemente (16, 18), die dazu vorgesehen sind, jeweils an ihren Enden fest mit einem der Rahmenquerelemente (12, 14) verbunden zu werden.

6. Flugzeugsitzrahmenvorrichtung nach Anspruch 5, **dadurch gekennzeichnet, dass** die Rahmenlängselemente (16, 18) zur Ausbildung unterschiedlicher Sitzkonfigurationen dazu vorgesehen sind, in unterschiedlichen Abständen zueinander an den Rahmenquerelementen (12, 14) befestigt zu werden.

7. Flugzeugsitzrahmenvorrichtung nach Anspruch 6, **dadurch gekennzeichnet, dass** die entsprechenden Rahmenlängselemente (16, 18) zur Ausbildung unterschiedlicher Sitzkonfigurationen identisch ausgebildet sind.

8. Flugzeugsitzrahmenvorrichtung nach einem der vorhergehenden Ansprüche, **gekennzeichnet durch** wenigstens ein Kabinenbodenbefestigungselement (20, 22, 24, 26), das in montiertem Zustand fest mit einem der Rahmenquerelemente (12, 14) verbunden ist.

9. Flugzeugsitzrahmenvorrichtung nach einem der vorhergehenden Ansprüche, **dadurch gekennzeichnet, dass** das Aufbauanbindungsmodul (28, 32, 34, 36) wenigstens ein Anschlagelement umfasst, das eine Ausgleichsbewegung um die Ausgleichsachse (70) auf einen Winkel zwischen -60 und +60 Grad beschränkt.

10. Flugzeugsitzrahmenvorrichtung nach einem der vorhergehenden Ansprüche, **dadurch gekennzeichnet, dass** das Aufbauanbindungsmodul (30) zu einer Ausgleichsbewegung um eine Schwenkachse vorgesehen ist, die senkrecht zu der Ausgleichsachse (70) ausgerichtet ist.

11. Flugzeugsitzrahmenvorrichtung nach einem der vorhergehenden Ansprüche, **gekennzeichnet durch** wenigstens eine Bodenplatte (38), die zumindest mit den Rahmenquerelementen (12, 14) verbunden ist und ein Lochmuster (40) aufweist.

## Claims

1. Aircraft seat frame device, which implements a base frame of an aircraft seat device and is configured, in a mounted state, for a mounting of an aircraft seat and of a shell element (46) on a cabin floor (44) of an aircraft, with at least one first transverse frame element (12), which realises a large side of the base frame and with at least one second transverse frame element (14), which is spaced apart from said first transverse frame element and realises a large side of the base frame, wherein the two transverse frame elements (12, 14) are connected to one another, wherein at least one of the transverse frame elements (12, 14) is realized as an open profile, with at least one superstructure connecting module (28, 30, 32, 34), which is in a mounted state fixedly connected to one of the transverse frame elements (12, 14) and is configured for connecting the shell element (46),
**characterised in that** the superstructure connecting module (28, 30, 32, 34) is configured to be pivotable at least about a compensation axis (70), for the purpose of permitting a compensatory movement of the shell element (46).

2. Aircraft seat frame device according to claim 1, **characterised in that** both transverse frame elements (12, 14) are embodied as an open profile.

3. Aircraft seat frame device according to one of claims 1 or 2, **characterised in that** at least one of the transverse frame elements (12, 14) is embodied as a C profile.

4. Aircraft seat frame device according to one of the preceding claims, **characterised in that** the transverse frame elements (12, 14) are embodied as extruded profiles.

5. Aircraft seat frame device according to one of the preceding claims, **characterised by** at least two longitudinal frame elements (16, 18) configured to be respectively fixedly connected to the transverse frame elements (12, 14) on their ends.

6. Aircraft seat frame device according to claim 5, **characterised in that,** for an implementation of different seat configurations, the longitudinal frame elements (16, 18) are configured to be fixated on the transverse frame elements (12, 14) so as to be spaced apart from one another by different distances.

7. Aircraft seat frame device according to claim 6, **characterised in that,** for an implementation of different seat configurations, the corresponding longitudinal frame elements (16, 18) are embodied identically.

8. Aircraft seat frame device according to one of the preceding claims, **characterised by** at least one cabin floor fixation element (20, 22, 24, 26), which is in a mounted state fixedly connected to one of the transverse frame elements (12, 14).

9. Aircraft seat frame device according to one of the preceding claims, **characterised in that** the superstructure connecting module (28, 32, 34, 34) comprises at least one abutment element restricting a compensatory movement about the compensation axis (70) to an angle between - 60 degrees and + 60 degrees.

10. Aircraft seat frame device according to one of the preceding claims, **characterised in that** the superstructure connecting module (30) is configured for a compensatory movement about a pivot axis that is oriented perpendicularly to the compensation axis (70).

11. Aircraft seat frame device according to one of the preceding claims, **characterised by** at least one base plate (38) that is connected at least to the transverse frame elements (12, 14) and has a hole pattern (40).

## Revendications

1. Dispositif de cadre de siège d'avion, qui forme un bâti d'un dispositif de siège d'avion et est configuré, en état monté, pour un montage d'un siège d'avion et d'un élément d'enveloppe (46) sur un sol de cabine (44) d'un avion, avec au moins un premier élément de cadre transversal (12) formant un bord large du bâti et avec au moins un deuxième élément de cadre transversal (14) espacé dudit premier élément de cadre transversal (12) et formant un bord large du bâti, où les deux éléments de cadre transversaux (12, 14) sont raccordés l'un à l'autre, où au moins l'un des éléments de cadre transversaux (12, 14) est réalisé comme profil ouvert, avec au moins un module à raccordement de superstructure (28, 30, 32, 34, 36), lequel est en état monté raccordé à l'un des éléments de cadre transversaux (12, 14) et est prévu pour un raccordement de l'élément d'enveloppe (46), **caractérisé en ce que** le module à raccordement de superstructure (28, 30, 32, 34, 36) est configuré à être pivotable au moins autour d'un axe de compensation (70) pour permettre un mouvement compensateur de l'élément d'enveloppe (46).

2. Dispositif de cadre de siège d'avion selon la revendication 1, **caractérisé en ce que** les deux éléments de cadre transversaux (12, 14) sont réalisés comme profils ouverts.

3. Dispositif de cadre de siège d'avion selon l'une quelconque des revendications 1 ou 2, **caractérisé en ce qu'**au moins un des éléments de cadre transversaux (12, 14) est réalisé comme profil en C.

4. Dispositif de cadre de siège d'avion selon l'une quelconque des revendications précédentes, **caractérisé en ce que** les éléments de cadre transversaux (12, 14) sont réalisés comme des profils extrudés.

5. Dispositif de cadre de siège d'avion selon l'une quelconque des revendications précédentes, **caractérisé par** au moins deux éléments de cadre longitudinaux (16, 18), qui sont configurés à être fixement raccordés, à ses extrémités, respectivement avec l'un des éléments de cadre transversaux (12, 14).

6. Dispositif de cadre de siège d'avion selon la revendication 5, **caractérisé en ce que,** pour le bût de réaliser des configurations de siège différentes, les éléments de cadre longitudinaux (16, 18) sont configurés à être fixés aux éléments de cadre transversaux (12, 14) ayant des distances différentes l'un de l'autre.

7. Dispositif de cadre de siège d'avion selon la revendication 6, **caractérisé en ce que,** pour le bût de réaliser des configurations de siège différentes, les éléments de cadre longitudinaux (16, 18) correspondants sont implémentés identiquement.

8. Dispositif de cadre de siège d'avion selon l'une quelconque des revendications précédentes, **caractérisé par** au moins un élément de fixation de sol de cabine (20, 22, 24, 26), qui est, en état monté, fixement raccordé avec l'un des éléments de cadre transversaux (12, 14).

9. Dispositif de cadre de siège d'avion selon l'une quelconque des revendications précédentes, **caractérisé en ce que** le module à raccordement de superstructure (28, 32, 34, 36) comporte au moins un élément de butée restreignant un mouvement compensateur autour de l'axe de compensation (70) à an angle entre - 60 degrés et + 60 degrés.

10. Dispositif de cadre de siège d'avion selon l'une quelconque des revendications précédentes, **caractérisé en ce que** le module à raccordement de superstructure (30) est configuré pour un mouvement compensateur autour d'un axe de pivotement orienté perpendiculairement à l'axe de compensation (70).

11. Dispositif de cadre de siège d'avion selon l'une quelconque des revendications précédentes, **caractérisé par** au moins une plaque de fond (38), raccordée au moins avec les éléments de cadre transversaux (12, 14) et ayant une matrice de perforation (40).
